(19) Europäisches Patentamt
European Patent Office
Office européen des brevets

(11) **EP 4 343 995 B1**

(12) **EUROPÄISCHE PATENTSCHRIFT**

(45) Veröffentlichungstag und Bekanntmachung des Hinweises auf die Patenterteilung:
**29.04.2026  Patentblatt 2026/18**

(21) Anmeldenummer: **23194551.0**

(22) Anmeldetag: **31.08.2023**

(51) Internationale Patentklassifikation (IPC):
**H02H 1/06** *(2006.01)*    *H02H 3/08* *(2006.01)*

(52) Gemeinsame Patentklassifikation (CPC):
**H02H 1/06**; H02H 3/08

(54) **LEISTUNGSSCHALTER**

POWER SWITCH

DISJONCTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **21.09.2022  DE 102022209951**

(43) Veröffentlichungstag der Anmeldung:
**27.03.2024  Patentblatt 2024/13**

(73) Patentinhaber: **Siemens Aktiengesellschaft**
**80333 München (DE)**

(72) Erfinder:
• **Plank, Gerald**
**92269 Fensterbach (DE)**
• **Venkatramani, Anand**
**90763 Fürth (DE)**

(74) Vertreter: **Siemens Patent Attorneys**
**Postfach 22 16 34**
**80506 München (DE)**

(56) Entgegenhaltungen:
WO-A1-98/13917    DE-A1- 102006 022 223
DE-A1- 102019 213 154    US-A- 3 526 812

**Beschreibung**

Die Erfindung betrifft einen Leistungsschalter nach dem Oberbegriff von Patentanspruch 1.

Leistungsschalter sind Schutzgeräte bzw. Schutzschaltgeräte, die ähnlich wie eine Sicherung funktionieren. Leistungsschalter überwachen den durch sie mittels eines Leiters hindurchfließenden Strom und unterbrechen den elektrischen Strom bzw. Energiefluss zu einer Energiesenke bzw. einem Verbraucher, was als Auslösung bezeichnet wird, wenn Schutzparameter, wie Stromgrenzwerte oder Strom-Zeitspannengrenzwerte, d.h. wenn ein Stromwert für eine gewisse Zeitspanne vorliegt, überschritten werden. Die Unterbrechung erfolgt beispielsweise durch Kontakte des Leistungsschalters, die geöffnet werden.

Insbesondere für Niederspannungsstromkreise bzw. -netze gibt es abhängig von der Höhe des vorgesehenen elektrischen Stromes im elektrischen Stromkreis verschiedene Typen von Leistungsschaltern. Mit Leistungsschalter im Sinne der Erfindung sind insbesondere Schalter gemeint, wie sie in Niederspannungsanlagen für Ströme von 63 bis 6300 Ampere eingesetzt werden. Spezieller werden geschlossene Leistungsschalter für Ströme von 63 bis 1600 Ampere, insbesondere von 125 bis 630 oder 1200 Ampere eingesetzt. Offene Leistungsschalter werden insbesondere für Ströme von 630 bis 6300 Ampere, spezieller von 1200 bis 6300 Ampere verwendet.

Offene Leistungsschalter werden auch als Air Circuit Breaker, kurz ACB, und geschlossene Leistungsschalter als Moulded Case Circuit Breaker oder Kompaktleistungsschalter, kurz MCCB, bezeichnet.

Mit Niederspannung sind insbesondere Spannungen bis 1000 Volt Wechselspannung oder 1500 Volt Gleichspannung gemeint. Mit Niederspannung sind ferner Spannungen gemeint, die größer als die Kleinspannung mit Werten von 50 Volt Wechselspannung oder 120 Volt Gleichspannung sind.

Mit Leistungsschalter im Sinne der Erfindung sind insbesondere Leistungsschalter mit einer Steuereinheit, wie einer elektronischen Auslöseeinheit, auch als Electronic Trip Unit, kurz ETU, bezeichnet, gemeint. Die Steuereinheit überwacht die Höhe des durch Sensoren, wie Rogowskispulen, gemessenen elektrischen Stromes bzw. zusätzlich in analoger Weise der Spannung oder/und anderer Parameter des elektrischen Stromkreises und bewirkt eine Unterbrechung des elektrischen Stromkreises. Für den Betrieb der Steuereinheit wird elektrische Energie benötigt, die durch einen Energiewandler, beispielsweise einem Transformator, zur Verfügung gestellt wird. Dieser ist primärseitig mit dem zu schützenden elektrischen Stromkreis und sekundärseitig mit der Steuereinheit verbunden.

Bei zu "hohem" Stromfluss unterbrechen Leistungsschalter den Stromkreis gemäß ihrer Schutzparameter bzw. Ansprechwerte. Die Schutzparameter bzw. Ansprechwerte sind im Wesentlichen die Höhe des Stromes oder/und die Höhe des Stromes und der Zeit, nach der ein Unterbrechen des Stromkreises bei andauernd "hohem" Stromfluss erfolgen soll. Im Unterschied zu einer Sicherung sind diese Schutzparameter bzw. Ansprechwerte bei einem Leistungsschalter einstellbar, beispielsweise mittels der Steuereinheit, wie einer elektronischen Auslöseeinheit.

Leistungsschalter gemäß dem Stand der Technik sind beispielsweise aus den nachfolgenden Patentanmeldungen bekannt: DE 10 2014 217 292 A1; DE 10 2014 217 332 A1; DE 10 2015 217 108 A1; DE 10 2014 218 831 A1; DE 10 2014 218 910 A1; DE 10 2016 201 651 A1; DE 10 2015 226 475 A1; DE 10 2015 216 981 A1; DE 10 2016 202 827 A1; DE 10 2016 201 659 A1; DE 10 2015 210 479 A1; DE 10 2014 224 173 A1; DE 10 2015 216 023 A1; DE 10 2016 217 425 A1; DE 10 2016 205 196 A1; DE 10 2016 221 093 A1; DE 10 2017 211 900 A1; DE 10 2017 201 239 A1; DE 10 2017 205 003 A1; DE 10 2017 205 004 A1; DE 10 2017 212 477 A1; DE 10 2017 214 903 A1; DE 10 2017 214 907 A1; DE 10 2017 215 820 A1.

Die Energiewandler dienen zur so genannten Eigenenergieversorgung von Leistungsschaltern. Sie basieren auf dem Prinzip der magnetisch gekoppelten Leistungsübertragung, wodurch Energie für die Steuereinheit, wie eine elektronische Auslöseeinheit zur Verfügung gestellt wird.

Häufig bildet hierbei ein Leiter des elektrischen Stromkreises die Primärseite des Energiewandlers. D.h. beispielsweise ist der elektrische Leiter die Primärspule des Energiewandlers.

Problematisch bei diesen Wandlern sind hohe und niedrige Primärströme, die einen entsprechend hohe bzw. niedrige Sekundärströme (Transformatorprinzip) hervorrufen. Hohe Primärströme können insbesondere bei hohen Lastströmen bzw. Kurzschlussströmen auftreten.

Die Steuereinheit benötigt eine gewisse Mindest-Energiemenge für ihren Betrieb. Um diese Energiemenge bereitzustellen, ist bei einem derartigen Energiewandler ein gewisser Strom (Eingangsstromschwellenwert) im Wechselstromkreis erforderlich. D.h. der Energiebedarf der Steuereinheit bestimmt den minimal erforderlichen Strom im Wechselstromkreis. D.h. erst bei bzw. ab diesem minimal erforderlichen Strom (Eingangsstromschwellenwert) kann der Leistungsschalter (gemäß seinen implementierten Funktionalitäten) Schutz bieten.

Die Reduzierung des Eingangsstromschwellenwertes, bei dem der Leistungsschalter Schutz bereitstellen kann, ist von großer Bedeutung. Der Eingangsstromschwellenwert (unterste Stromschwelle) kann durch Vergrößern des Energiewandlers (Stromwandlers) verringert werden. Bei kompakten Geräten wie Leistungsschaltern ist diese Möglichkeit durch den begrenzten Platz jedoch begrenzt.

Andererseits soll der Leistungsschalter auch bei hohen Strömen noch sicher funktionieren. Insbesondere besteht das Problem, dass Energiewandler die bei geringen Strömen bereits ausreichend Energie liefern, bei höhen Strömen zu viel Energie an die Steuereinheit abgeben, wodurch diese in ihrer Funktion beeinträchtigt werden kann.

Der Entwurf einer Energieversorgung für Steuereinheiten eines Leistungsschalters ist folglich kein triviales Problem.

Die Scheinleistung eines Stromwandlers steigt linear mit der Primärstromamplitude und der Netzfrequenz an. Daraus resultiert ein minimaler Primärstrom, der notwendig ist um die sekundärseitige Leistungsanforderung der Steuereinheit bzw. ETU zu erfüllen. Dieser minimale Primärstrom (Eingangsstromschwellenwert) wird durch die Anforderungen der Anwendung festgelegt und daraus resultiert die magnetische Dimensionierung des ferromagnetischen Kerns im Energiewandler bzw. Stromwandler (insb. die Materialauswahl sowie magnetische Kernlänge und Querschnitt). Im Wesentlichen ergibt sich ein minimaler magnetischer Querschnitt A für einen magnetischen Arbeitspunkt B, der sich aus einer notwendigen Sekundärspannung U bei der Netzfrequenz f ableitet.

Oberhalb des minimalen Primärstroms steigt die Scheinleistung durch die Primärstromamplitude getrieben an. Die Leistungsaufnahme der Steuereinheit bleibt aber für alle Betriebsbedingungen weitgehend konstant und so ergibt sich ein Problem. Die überschüssige Leistung wird im Eingangsspannungsregler und/oder in der Sekundärwicklung in Wärme umgewandelt. Diese Wärme muss abgeführt werden oder es entsteht eine kritische Eigenerwärmung in der Steuereinheit und/oder im Energiewandler.

In der internationalen Veröffentlichung WO 98/13917 wird eine Spannungsversorgung von elektronischen Auslöseeinrichtungen beschrieben. Diese betrifft eine Schaltungsanordnung zur Spannungsversorgung von elektronischen Auslöseeinrichtungen, insbesondere von Überstromauslösern der Nieder- und Mittelspannungstechnik. Die Stromwandlereinrichtung enthält einen Spannungswandler (SPW) zur Versorgung der Auslöseeinrichtungen mit einer zweiten Hilfsspannung (UH2) bei fehlenden bzw. relativ kleinen Strömen und einen Stromwandler (STW) zur Versorgung der Auslöseeinrichtungen mit einer ersten Hilfsspannung (UHl) bei sehr hohen Strömen, wobei dem Spannungswandler (SPW) eine zweite Spannungsregeleinrichtung (SR2) zur Erzeugung der zweiten Hilfsspannung (UH2) nachgeschaltet ist und beide Hilfsspannungen (UHl, UH2) über eine Diodenentkopplungseinrichtung (DE) einem gemeinsamen Anschluß der Hilfsspannung (UH) zugeführt sind. Derartige Schaltungsanordnungen werden zur Spannungsversorgung von Überstromauslösern in der Nieder- und Mittelspannungstechnik eingesetzt.

Die amerikanische Patentschrift US 3,526,812 beschreibt eine Stromversorgung zur Bereitstellung von Auslöseenergie für einen in einen Stromkreis angeschlossenen Leistungsschalter. Sie besteht aus einem Kondensator, der durch einen unidirektionalen pulsierenden Strom geladen wird, der über einen Stromtransformator und Gleichrichtermittel aus dem Stromkreis abgeleitet wird. Ein niederohmiger Pfad wird über die Sekundärwicklung des Stromtransformators durch einen Zenerdiodengesteuerten Kurzschlussthyristor hergestellt, wenn die momentane Spannung über dem Kondensator einen vorbestimmten Wert erreicht, wodurch ein weiterer Anstieg der Kondensatorspannung bis zur nächsten Halbwelle des pulsierenden Stroms blockiert wird.

Die deutsche Offenlegungsschrift DE 10 2019 213 154 A1 beschreibt einen Leistungsschalter zur Unterbrechung eines elektrischen Niederspannungsstromkreises bei Überschreitung von Stromader/und Strom-Zeitspannen-Grenzwerten, mit einem Energiewandler (CT), dessen Primärseite (PS) einen Leiterabschnitt des Niederspannungsstromkreises aufweist und sekundärseitig eine Energieversorgung für mindestens eine Steuereinheit (ETU) des Leistungsschalters zur Verfügung stellt, wobei zwischen sekundärseitigem Ausgang des Energiewandlers (CT) und Steuereinheit (ETU) des Leistungsschalters eine Drossel (L) geschaltet ist. Der Energiewandler (CT) und die Drossel (L) sind in einem Gehäuse (GEH) angeordnet, wobei die Drossel (L) zumindest teilweise mit einem Blech (BL) aus weichmagnetischem Material umgeben ist.

Die deutsche Offenlegungsschrift DE 10 2006 022 223 A1 beschreibt ein Anlagenteil und Anlage. Das Anlagenteil und Anlage umfasst ein Schutzmodul mit einen Gleichrichter, der zur Ladung einer Kapazität vorgesehen ist, der ein Entladewiderstand parallel geschaltet ist.

Aufgabe der vorliegenden Erfindung ist es, einen Leistungsschalter eingangs genannter Art zu verbessern, insbesondere eine Energieversorgung bereitzustellen, die einerseits bei niedrigen Strömen im Wechselstromkreis genügend Energie liefert und andererseits bei hohen Strömen im Wechselstromkreis sicher arbeitet.

Diese Aufgabe wird für einen Leistungsschalter ausgehendend vom Oberbegriff des Patentanspruchs 1 durch die kennzeichnenden Merkmale des Patentanspruchs 1 gelöst.

Erfindungsgemäß ist vorgesehen, dass an den sekundärseitigen Ausgang des Energiewandlers parallel eine erste und eine zweite Gleichrichterschaltung angeschlossen ist. Die erste Gleichrichterschaltung ist über einen Kondensator mit dem sekundärseitigen Ausgang des Energiewandlers verbunden. Die zweite Gleichrichterschaltung ist insbesondere direkt verbunden.

Dies hat den besonderen Vorteil, dass die erste Gleichrichterschaltung durch den Kondensator optimal an den Energiewandler angepasst ist und so bei niedrigen Strömen genügend Energie für die Steuereinheit bzw. Verbraucher des Leistungsschalters liefern kann. Bei hohen Strömen ist die erste Gleichrichterschaltung durch den Kondensator nicht mehr optimal angepasst, so dass die abgegebene Energie gering ist.

Hier übernimmt die zweite Gleichrichterschaltung die Energieversorgung. Die Gleichrichterschaltungen sind dazu erfindungsgemäß ausgangseitig parallelgeschaltet (um die Energieversorgung für die mindestens eine Steuereinheit des Leistungsschalters zur Verfügung zu stellen).

Weitere vorteilhafte Ausgestaltungen sind in den Unteransprüchen angegeben.

In einer vorteilhaften Ausgestaltung der Erfindung bildet ein Leiter des elektrischen Stromkreises die Primärseite des Energiewandlers.

Dies hat den besonderen Vorteil, dass ein einfacher Aufbau gegeben ist.

In einer vorteilhaften Ausgestaltung der Erfindung bildet der Kondensator einen Serienschwingkreis mit der Induktivität der Sekundärseite des Energiewandlers.

Dies hat den besonderen Vorteil, dass eine maximale Energiebereitstellung gegeben ist und so minimal mögliche Ströme im Wechselstromkreis für eine sichere Energieversorgung erzielt werden können.

In einer vorteilhaften Ausgestaltung der Erfindung ist der Kondensator derart bemessen ist, dass sein kapazitiver Blindwiderstand für die Betriebsfrequenz des Wechselstromkreises gleich dem induktiven Blindwiderstand der Induktivität entspricht, wobei für den induktiven Blindwiderstand ein Wert angesetzt wird, der für Ströme im Wechselstromkreis bis zu einer ersten Stromhöhe auftritt. D.h. der kapazitive Blindwiderstand hebt sich mit dem induktiven Blindwiderstand bei der Betriebsfrequenz (z.B. 50 Hz) auf, die Beträge sind gleich. Dies hat den besonderen Vorteil, dass eine optimale bzw. maximale Energiebereitstellung gegeben ist und so minimal mögliche bzw. definierte Ströme im Wechselstromkreis für eine sichere Energieversorgung erzielt werden können.

In einer vorteilhaften Ausgestaltung der Erfindung ist der Kondensator bzw. Serienschwingkreis derart ausgestaltet, dass für Ströme bis zur ersten Stromhöhe die vom Energiewandler abgegebene Energie im Wesentlichen über die erste Gleichrichterschaltung an die Steuereinheit abgegeben wird.

In einer weiteren vorteilhaften Ausgestaltung der Erfindung wird für Ströme ab der ersten Stromhöhe die vom Energiewandler abgegebene Energie im Wesentlichen über die zweite Gleichrichterschaltung an die Steuereinheit abgegeben.

Dies hat den besonderen Vorteil, dass eine optimale Energieversorgung, sowohl bei niedrigen als auch bei höheren Strömen gegeben ist.

In einer vorteilhaften Ausgestaltung der Erfindung ist den sekundärseitigen Ausgang des Energiewandlers ein Überspannungsschutzelement parallelgeschaltet.

Dies hat den besonderen Vorteil, dass Spannungsspitzen für Ströme oberhalb normaler Betriebssituationen begrenzt werden.

In einer vorteilhaften Ausgestaltung der Erfindung ist die erste oder (und) zweite Gleichrichterschaltung eine Vollweg-Brückengleichrichterschaltung (auch Graetz-Brücke bezeichnet).

Dies hat den besonderen Vorteil, dass ein besonders guter Wirkungsgrad der Gleichrichtung und eine problemlose Parallelschaltung der Ausgänge gegeben ist.

Alle Ausgestaltungen, sowohl in abhängiger Form rückbezogen auf den Patentanspruch 1, als auch rückbezogen lediglich auf einzelne Merkmale oder Merkmalskombinationen von Patentansprüchen, bewirken eine Verbesserung eines Leistungsschalters.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:

Figur 1 ein Prinzipschaltbild eines Leistungsschalters,
Figur 2 ein Schaltbild zur Erläuterung,
Figur 3 ein Ersatzschaltbild einer Sekundärwicklung,
Figur 4 ein Schaltbild einer erfindungsgemäßen Ausgestaltung,
Figur 5 ein Diagramm einer B-H-Kurve,
Figur 6 ein weiteres Schaltbild zur erfindungsgemäßen Erläuterung.

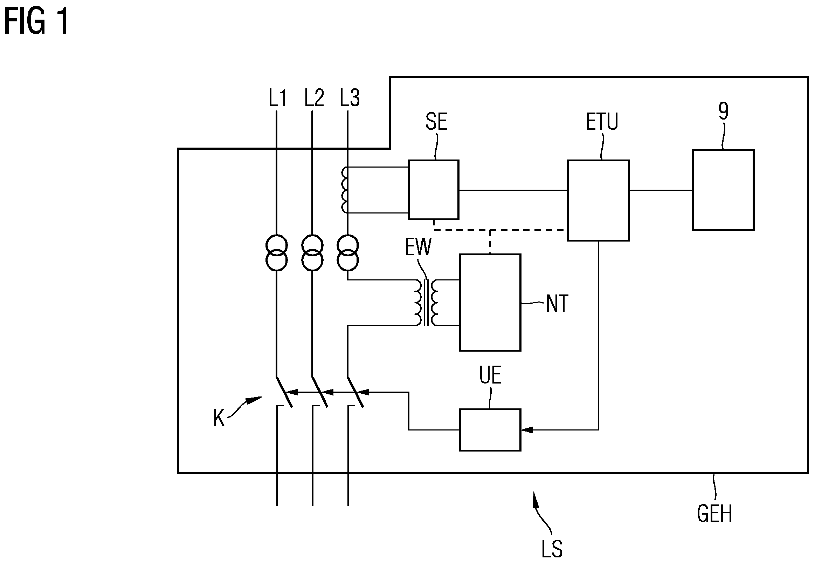

Figur 1 zeigt eine Darstellung eines Prinzipschaltbildes eines beispielshaften Leistungsschalters. Figur 1 zeigt schematisch einen Niederspannungsleistungsschalter LS, wobei verschiedene Einheiten des Leistungsschalters in einem Gehäuse GEH dargestellt sind. Figur 1 zeigt elektrische Leiter L1, L2, L3 eines Niederspannungsstromkreises, beispielsweise einen Dreiphasen-Wechselstromkreises, wobei der erste Leiter L1 die erste Phase, der zweite Leiter L2 die zweite Phase und der dritte Leiter L3 die dritte Phase des Dreiphasen-Wechselstromkreises bildet. Es können ferner noch ein Neutralleiter und ein Schutzleiter vorgesehen sein.

Im Beispiel gemäß Figur 1 ist der dritte Leiter L3 mit einem Energiewandler EW verbunden, derart, dass mindestens ein Teil des Stromes, d.h. ein Leiterteilstrom, bzw. der gesamte Strom des dritten Leiters durch die Primärseite des Energiewandlers EW fließt. Der Energiewandler EW ist üblicherweise ein Transformator mit Kern, z.B. ein Eisenwandler. In einer Ausgestaltung kann in jeder Phase bzw. in jedem Leiter des elektrischen Stromkreises ein Energiewandler EW vorgesehen sein. Die Sekundärseite des Energiewandlers EW bzw. jedes vorgesehenen Energiewandler ist mit einem Netzteil NT (oder mehreren Netzteilen) verbunden, das eine Energieversorgung - d.h. Eigenversorgung, beispielsweise in Form einer Versorgungsspannung, für die Steuereinheit ETU, beispielsweise eine elektronische Auslöseeinheit ETU, zur Verfügung stellt. An die Steuereinheit ETU kann mindestens eine Zusatzkomponente 9 angeschlossen sein. Das Netzteil NT kann zudem noch mit einem ersten Stromsensor SE verbunden sein, zur Energieversorgung des ersten Stromsensors - falls erforderlich.

Der erste Stromsensor SE weist mindestens ein Sensorelement auf, beispielsweise eine Rogowskispule, einen Messwiderstand / Shunt, einen Hallsensor o.ä., zur Ermittlung der Höhe des elektrischen Stromes mindestens eines Leiters des elektrischen Stromkreises. In einer üblichen Ausbauvariante wird die Höhe des elektrischen Stromes jedes Phasenleiters bzw. Leiters des elektrischen Stromkreises ermittelt.

Der erste Stromsensor SE ist mit der Steuereinheit ETU (elektronische Auslöseeinheit ETU) verbunden und übermittelt dieser die Höhe des elektrischen Stromes mindestens eines Leiters, der Phasenleiter oder aller Leiter des elektrischen Stromkreises.

Die Steuereinheit ETU kann eine so genannte Electronic Trip Unit sein.

Die übermittelten Stromwerte werden in der Steuereinheit ETU mit Stromgrenzwerten oder/und Strom-Zeitspannen-Grenzwerten, die Auslösegründe bilden, verglichen. Bei Überschreitung dieser wird eine Unterbrechung des elektrischen Stromkreises veranlasst. Dies kann beispielsweise dadurch erfolgen, dass eine Unterbrechungseinheit UE vorgesehen ist, die einerseits mit der Steuereinheit ETU verbunden ist und andererseits Kontakte K zur Unterbrechung der Leiter L1, L2, L3 bzw. weiterer Leiter des elektrischen Stromkreises aufweist. Die Unterbrechungseinheit UE erhält in diesem Fall von der Steuereinheit ETU ein Unterbrechungssignal zur Öffnung der Kontakte.

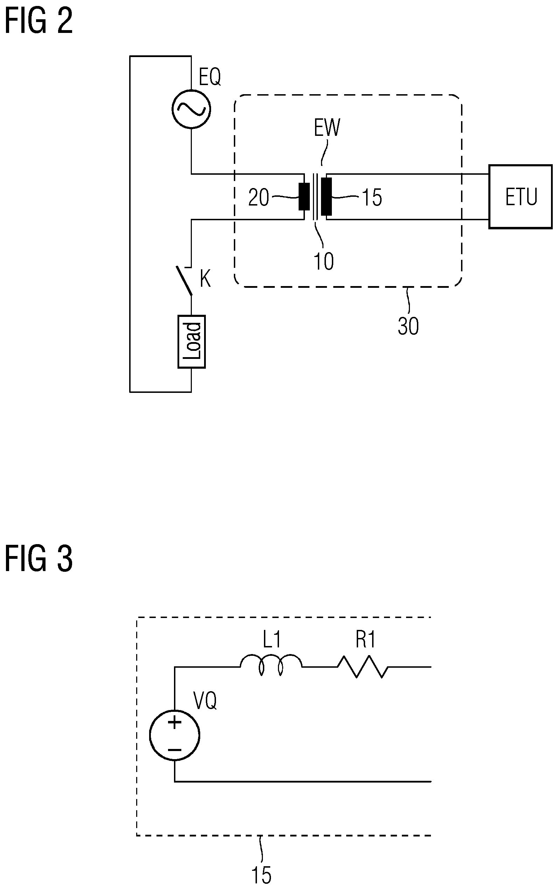

Figur 2 zeigt ein erstes Schaltbild zur Erläuterung der Erfindung. Eine als Energiequelle dienende Wechselstromquelle EQ versorgt einen als Energiesenke dienenden Energie-Verbraucher Load. Ein Leiter dieses Stromkreises bildet die Primärseite 20 des Energiewandlers EW. Dabei kann der Leiter mehrere Windungen einer Primärspule des Energiewandlers EW aufweisen. Es kann aber auch lediglich der Leiter (ohne Windung) gerade durch bzw. an einen Kern 10 des Energiewandlers EW durch- oder vorbeigeführt sein.

Der Kern 10 des Energiewandlers EW weist dabei ferner einen sekundärseitigen Ausgang bzw. eine Sekundärseite mit Sekundärwicklung 15 auf, die durch eine oder mehrere Windungen einer Sekundärwicklung bzw. -spule 15 gebildet ist.

Die beiden Anschlüsse der Sekundärwicklung 15 bilden den sekundärseitigen Ausgang des Energiewandlers EW, der eine Energieversorgung für die beiden Eingänge der mindestens einen Steuereinheit ETU zur Verfügung stellt. Es können weitere, nicht dargestellte Komponenten des Netzteils NT vorgesehen sein, die sich beispielsweise im Block 30 befinden könnten. Jeweils ein Ausgang ist mit einem Eingang elektrisch verbunden.

Figur 3 zeigt ein Ersatzschaltbild des sekundärseitigen Ausgangs bzw. der Sekundärwicklung 15 des Energiewandlers EW. Das Ersatzschaltbild der Sekundärwicklung 15 weist eine Spannungsquelle VQ (der in der Sekundärwicklung induzierten Spannung) in Serie mit einer Induktivität L1 (der Induktivität der Sekundärwicklung) und einem Widerstand R1 (dem Drahtwiderstand der Sekundärwicklung) auf.

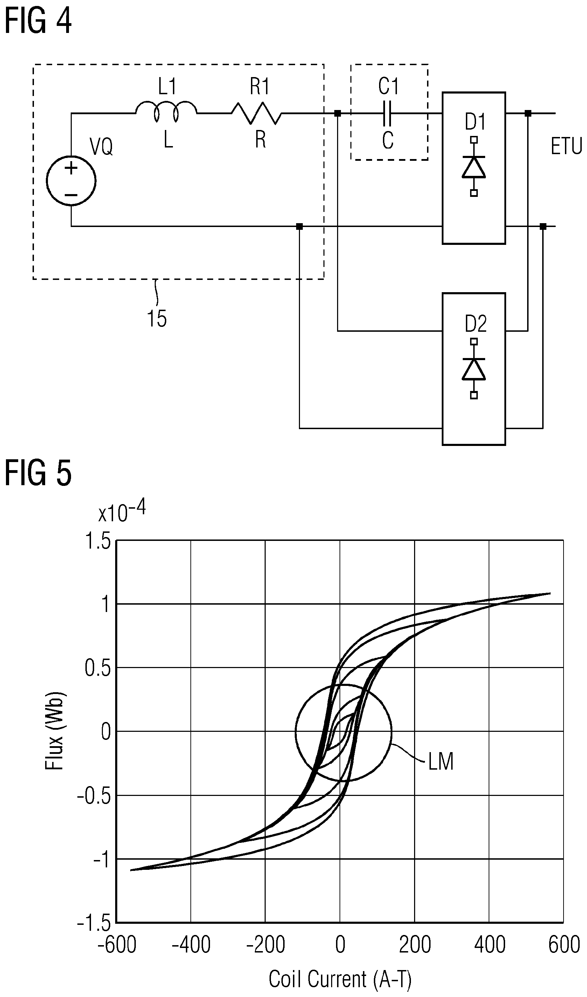

Figur 4 zeigt eine Darstellung gemäß Figur 3, mit dem Unterschied, dass eine erste und eine zweite Gleichrichterschaltung D1, D2 mit dem sekundärseitigen Ausgang des Energiewandlers EW respektive mit der Sekundärwicklung 15 (repräsentiert durch das Ersatzschaltbild) angeschlossen sind.

Die Gleichrichterschaltungen D1, D2 sind eingangsseitig parallelgeschaltet. Erfindungsgemäß ist die erste Gleichrichterschaltung D1 über einen Kondensator C1 mit der Sekundärwicklung 15 verbunden. D.h. erfindungsgemäß ist in mindestens einer Verbindung zwischen Sekundärwicklung 15 und erster Gleichrichterschaltung D1 ein Kondensator bzw. eine Kapazität vorgesehen.

Die zweite Gleichrichterschaltung D2 ist direkt mit der Sekundärwicklung 15 verbunden.

Die erste und die zweite Gleichrichterschaltung D1, D2, d.h. die Gleichrichterschaltungen, sind ausgangseitig parallelgeschaltet, um eine Energieversorgung für die mindestens eine Steuereinheit ETU des Leistungsschalters LS zur Verfügung zu stellen.

Vorteilhaft bildet der Kondensator C1 einen Serienschwingkreis mit der Induktivität L1 der Sekundärwicklung 15 des Energiewandlers EW. Vorteilhaft ist der Kondensator C1 derart bemessen, dass sein kapazitiver Blindwiderstand (XC = 1/ωC)

(ω = 2 * Pi * f = Kreisfrequenz)
(C = Kapazität der Kapazität C1)
(XC = kapazitiver Blindwiderstand)
für die Betriebsfrequenz des Wechselstromkreises gleich dem induktiven Blindwiderstand (XL) der Induktivität L1 entspricht, d.h. der Betrag des induktiven Blindwiderstandes entspricht dem Betrag des kapazitiven Blindwiderstandes (|XL|=|XC|). Dadurch heben sich die Blindanteile bei der Bemessungsfrequenz (wobei diese der Betriebsfrequenz des Wechselstromkreises entsprechen sollte, z.B. 50 Hz) auf.

(XL = ωL = induktiver Blindwiderstand)
(L = Induktivität der Induktivität L1)

Für den induktiven Blindwiderstand XL wird beispielsweise ein Wert angesetzt, der für Ströme bis zu einer ersten Stromhöhe auftritt.

Im Folgenden wird dies nochmal im Zusammenhang mit weiteren Ergänzungen und anderen Worten erläutert. Die Steuereinheit ETU wird mit Energiewandlern (Stromwandlern) versorgt, die im Leistungsschalter LS platziert sind. Diese Energiewandler EW haben z.B. eine torodiale Konstruktion mit einem vollständigen Flusspfad, der durch z.B. den Kern 10 mit Eisenmaterial (Eisen-Kern 10) gebildet wird. Der Primärleiter der Primärseite 20 wird durch z.B. einen als Ring (Toroid) ausgebildeten Kern 10 geführt. Die vom Primärleiter erzeugte elektromagnetische Energie wird vom Eisen-Kern 10 eingefangen. Die um den Eisenkern 10 gewickelten Sekundärwicklungen 15 wandeln die elektromagnetische Energie in elektrische Energie um (Spannungsquelle VQ).

Abhängig von der Höhe des Stromes der Primärseite 20 weist der Energiewandler ein unterschiedliches Verhalten auf. Bei niedrigen Strömen, bis zu einer ersten Stromhöhe, liegt ein im Wesentlichen linearer Betrieb des Energiewandlers EW vor.

Bei hohen Strömen, ab einer ersten Stromhöhe, liegt ein im Wesentlichen nichtlinearer Betrieb des Energiewandlers EW vor.

Dieses duale Verhalten ist auf den Kern 10, ausgeführt als Eisenkern, zurückzuführen, der zur Übertragung der elektromagnetischen Energie verwendet wird.

Die Eigenschaft des Eisenkerns wird durch eine so genannte Kurve B-H-Kurve charakterisiert, wie in Figur 5 dargestellt.

Figur 5 zeigt eine B-H-Kurve. Diese zeigt die Flussmenge Flux (Wb) auf der vertikalen Achse, die vom Eisenkern als Reaktion auf den Eingangsleitungsstrom Coil Current (A-T) auf der horizontalen Achse erzeugt wird.

Bei niedrigen Leitungsströmen Coil Current (niedriges H) ist die Kurve annähernd linear, wie im Diagram als linearer Bereich LM (Kreis) eingezeichnet ist.

In diesem Betriebsbereich bis zu einer ersten Stromhöhe verhält sich der Energiewandler EW wie eine stromabhängige Spannungsquelle VQ mit einer Reiheninduktivität L1, wie im Ersatzschaltbild dargestellt (sowie einer Widerstandskomponente des Widerstands R1).

Bei höheren Eingangsströmen weicht der Energiewandler EQ von diesem Modell ab und verhält sich wie eine nichtlineare Spannungsquelle VQ. Erfindungsgemäß wird die Linearität von Energiewandlern EW bei niedrigen Leitungsströmen (bis zu einer ersten Stromhöhe) genutzt. Hier wird mehr Energie unter Verwendung eines Kondensators, der einen Serienschwingkreis bildet, d.h. unter Nutzung von Resonanz, bei niedrigeren Leitungsströmen extrahiert (Resonanz-Kondensator C1 in Reihe geschaltet).

Bei niedrigeren Leitungsströmen (auf der Primärseite 10) hebt die Kapazität des Kondensators C1 die Induktivität L1 (der Sekundärwicklung 15) auf. Dies trägt dazu bei, dass gemäß Ersatzschaltbild die Spannungsquelle VQ der Sekundärwicklung 15 direkt die erste Gleichrichterschaltung D1 mit Energie versorgt, also eine Anpassung (reduzierte Quellenimpedanz) erzielt wird, um so eine höhere Leistung für die Steuereinheit zu extrahieren. Die Energie fließt zur ersten Gleichrichterschaltung D1.

Bei höheren Leitungsströmen, ab einer ersten Stromhöhe, wenn der Energiewandler EW nicht linear arbeitet, kann der Kondensator C1 die Induktivität L1 aufgrund ihrer Wertänderung nicht kompensieren. Die Energie wird dann mittels der zweiten Gleichrichterschaltung D2 entnommen.

Zusammengefasst, Quellimpedanz Z:

$Z = R1$ bei niedrigen Leitungsströmen ($|XL| = |XC|$)

$$Z = \sqrt{XL1^2 + R1^2}$$ bei höheren Leitungsströmen

Die Quellenimpedanz Z wird bei niedrigen Leitungsströmen reduziert und es kann eine höhere Leistung aus dem Energiewandler EW entnommen werden. Somit kann auch bei geringen Strömen auf der Primärseite 20 Energie für eine Steuereinheit ETU zur Verfügung gestellt werden.

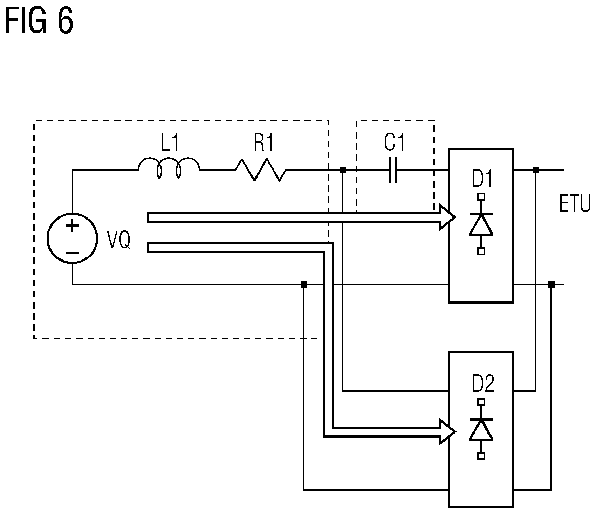

Figur 6 zeigt eine Darstellung gemäß Figur 4, mit dem erfindungsgemäß eingezeichnetem Energiefluss.

Der Kondensator C1 bzw. der Serienschwingkreis aus der Serienschaltung des Kondensators C1 und der Induktivität L1 sind derart ausgestaltet, dass für Ströme bis zu einer ersten Stromhöhe die vom Energiewandler EW abgegebene Energie im Wesentlichen über die erste Gleichrichterschaltung D1 an die Steuereinheit ETU abgegeben wird.

Für Ströme ab der ersten Stromhöhe wird die vom Energiewandler EW abgegebene Energie im Wesentlichen über die zweite Gleichrichterschaltung D2 an die Steuereinheit ETU abgegeben.

Dem sekundärseitigen Ausgang bzw. der Sekundärwicklung 15 des Energiewandlers EW kann ein Überspannungsschutzelement parallelgeschaltet sein.

Die erste oder (und) zweite Gleichrichterschaltung kann eine Vollweg-Brückengleichrichterschaltung sein.

Der Kern 10 kann ein nanokristalliner magnetischer Kern sein, um beispielsweise Stromoberschwingungen zu reduzieren.

Es können weitere Komponenten / Komponenten des Netzteils NT vorgesehen sein.

Die Erfindung nutzt die Linearität von Energiewandlern bei niedrigen Strömen, um die mit einem Kondensator gelieferte Leistung zu erhöhen. Es erfolgt eine dynamische Änderung des Energieflusspfades mit zwei Gleichrichterschaltungen, eine für Resonanz und eine ohne Resonanz, ohne die Komplexität des Systems (wesentlich) zu erhöhen. Die Erfindung reduziert damit auf den Primärseite notwendigen Strom um Energie (für z.B. eine Steuereinheit) bereitzustellen. Zwei parallel geschaltete Gleichrichterschaltungen machen komplizierte Schaltmechanismen überflüssig.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die Ansprüche bestimmten Schutzumfang der Erfindung zu verlassen.

**Patentansprüche**

1. Leistungsschalter (LS) zur Unterbrechung eines elektrischen Wechselstromkreises bei Überschreitung von Strom- oder/und Strom-Zeitspannen-Grenzwerten,

   mit einem Energiewandler (EW), der primärseitig mit dem elektrischen Stromkreis verbunden ist und sekundärseitig eine Energieversorgung für mindestens eine Steuereinheit (ETU) des Leistungsschalters (LS) zur Verfügung stellt, **dadurch gekennzeichnet,** **dass** an den sekundärseitigen Ausgang (15) des Energiewandlers eine erste und eine zweite Gleichrichterschaltung (D1, D2) angeschlossen ist, **dass** die erste Gleichrichterschaltung (D1) über einen Kondensator (C1) mit dem sekundärseitigen Ausgang (15) des Energiewandlers (EW) verbunden ist, **dass** die Gleichrichterschaltungen (D1, D2) ausgangseitig parallelgeschaltet sind, um eine Energieversorgung für die mindestens eine Steuereinheit (ETU) des Leistungsschalters (LS) zur Verfügung zu stellen.

2. Leistungsschalter (LS) nach Patentanspruch 1, **dadurch gekennzeichnet,** **dass** ein Leiter des elektrischen Stromkreises die Primärseite (20) des Energiewandler (EW) bildet.

3. Leistungsschalter (LS) nach Patentanspruch 1 oder 2, **dadurch gekennzeichnet,** **dass** der Kondensator (C1) einen Serienschwingkreis mit der Induktivität (L1) der Sekundärwicklung (15) des Energiewandlers (EW) bildet.

4. Leistungsschalter (LS) nach Patentanspruch 3, **dadurch gekennzeichnet,** **dass** der Kondensator (C1) derart bemessen ist, dass sein kapazitiver Blindwiderstand für die Betriebsfrequenz des Wechselstromkreises gleich dem induktiven Blindwiderstand der Induktivität (L1) entspricht, wobei für den induktiven Blindwiderstand insbesondere ein Wert angesetzt wird, der für Ströme bis zu einer ersten Stromhöhe auftritt.

5. Leistungsschalter (LS) nach Patentanspruch 3 oder 4, **dadurch gekennzeichnet,**

**dass** der Kondensator (C1) bzw. Serienschwingkreis derart ausgestaltet ist, dass für Ströme bis zur ersten Stromhöhe die vom Energiewandler abgegebene Energie im Wesentlichen über die erste Gleichrichterschaltung (D1) an die Steuereinheit (ETU) abgegeben wird.

6. Leistungsschalter (LS) nach Patentanspruch 5, **dadurch gekennzeichnet,** **dass** für Ströme ab der ersten Stromhöhe die vom Energiewandler (EW) abgegebene Energie im Wesentlichen über die zweite Gleichrichterschaltung (D2) an die Steuereinheit (ETU) abgegeben wird.

7. Leistungsschalter (LS) nach einem der vorhergehenden Patentansprüche, **dadurch gekennzeichnet,** **dass** dem sekundärseitigen Ausgang (15) des Energiewandlers (EW) ein Überspannungsschutzelement parallelgeschaltet ist.

8. Leistungsschalter (LS) nach einem der vorhergehenden Patentansprüche, **dadurch gekennzeichnet,** **dass** die erste oder zweite Gleichrichterschaltung (D1, D2) eine Vollweg-Brückengleichrichterschaltung ist.

**Claims**

1. Circuit breaker (LS) for interrupting an AC electrical circuit when current and/or current/time period limit values are exceeded,

   having an energy transducer (EW), the primary side of which is connected to the electrical circuit and the secondary side of which provides an energy supply for at least one control unit (ETU) of the circuit breaker (LS), **characterized** **in that** a first and a second rectifier circuit (D1, D2) are connected to the secondary-side output (15) of the energy transducer, **in that** the first rectifier circuit (D1) is connected to the secondary-side output (15) of the energy transducer (EW) via a capacitor (C1), **in that** the output sides of the rectifier circuits (D1, D2) are connected in parallel in order to provide an energy supply for the at least one control unit (ETU) of the circuit breaker (LS).

2. Circuit breaker (LS) according to Patent Claim 1, **characterized** **in that** a conductor of the electrical circuit forms the primary side (20) of the energy transducer (EW).

3. Circuit breaker (LS) according to Patent Claim 1 or 2,

**characterized**
**in that** the capacitor (C1) forms a series resonant circuit with the inductor (L1) of the secondary winding (15) of the energy transducer (EW).

4. Circuit breaker (LS) according to Patent Claim 3, **characterized**
**in that** the capacitor (C1) is dimensioned such that its capacitive reactance for the operating frequency of the AC circuit corresponds identically to the inductive reactance of the inductor (L1), wherein in particular a value that occurs for currents up to a first current level is set for the inductive reactance.

5. Circuit breaker (LS) according to Patent Claim 3 or 4, **characterized**
**in that** the capacitor (C1) or series resonant circuit is designed in such a way that, for currents up to the first current level, the energy delivered by the energy transducer is essentially delivered to the control unit (ETU) via the first rectifier circuit (D1).

6. Circuit breaker (LS) according to Patent Claim 5, **characterized**
**in that**, for currents from the first current level upward, the energy delivered by the energy transducer (EW) is essentially delivered to the control unit (ETU) via the second rectifier circuit (D2).

7. Circuit breaker (LS) according to one of the preceding patent claims, **characterized**
**in that** an overvoltage protection element is connected in parallel with the secondary-side output (15) of the energy transducer (EW).

8. Circuit breaker (LS) according to one of the preceding patent claims, **characterized**
**in that** the first or second rectifier circuit (D1, D2) is a full-wave bridge rectifier circuit.


**Revendications**

1. Disjoncteur (LS) pour l'interruption d'un circuit électrique alternatif en cas de dépassement de valeurs limites de courant et/ou de durée,

comprenant un convertisseur d'énergie (EW) qui est relié côté primaire au circuit électrique et qui fournit côté secondaire une alimentation en énergie pour au moins une unité de commande (ETU) du disjoncteur (LS), **caractérisé en ce que**
un premier et un deuxième circuit redresseur (D1, D2) sont raccordés à la sortie secondaire (15) du convertisseur d'énergie,
le premier circuit redresseur (D1) est relié à la sortie secondaire (15) du convertisseur d'énergie (EW) par l'intermédiaire d'un condensateur (C1),
les circuits redresseurs (D1, D2) sont connectés en parallèle côté sortie afin de fournir une alimentation électrique à au moins une unité de commande (ETU) du disjoncteur (LS).

2. Disjoncteur (LS) selon la revendication 1, **caractérisé en ce que**
un conducteur du circuit électrique forme le côté primaire (20) du convertisseur d'énergie (EW).

3. Disjoncteur (LS) selon la revendication 1 ou 2, **caractérisé en ce que**
le condensateur (C1) forme un circuit oscillant série avec l'inductance (L1) de l'enroulement secondaire (15) du convertisseur d'énergie (EW).

4. Disjoncteur (LS) selon la revendication 3, **caractérisé en ce que**
le condensateur (C1) est dimensionné de telle sorte que sa réactance capacitive pour la fréquence de fonctionnement du circuit à courant alternatif correspond à la réactance inductive de l'inductance (L1), dans lequel une valeur qui apparaît pour des courants jusqu'à une première valeur de courant est notamment fixée pour la réactance inductive.

5. Disjoncteur (LS) selon la revendication 3 ou 4, **caractérisé en ce que**
le condensateur (C1) ou le circuit oscillant série est conçu de telle sorte que, pour les courants jusqu'à la première valeur de courant, l'énergie délivrée par le convertisseur d'énergie est transmise à l'unité de commande (ETU) essentiellement par l'intermédiaire du premier circuit redresseur (D1).

6. Disjoncteur (LS) selon la revendication 5, **caractérisé en ce que**
pour des courants à partir de la première valeur de courant, l'énergie délivrée par le convertisseur d'énergie (EW) est transmise à l'unité de commande (ETU) essentiellement par l'intermédiaire du deuxième circuit redresseur (D2).

7. Disjoncteur (LS) selon l'une des revendications précédentes, **caractérisé en ce que**
un élément de protection contre les surtensions est connecté en parallèle à la sortie secondaire (15) du convertisseur d'énergie (EW) .

8. Disjoncteur (LS) selon l'une des revendications précédentes, **caractérisé en ce que**
le premier ou le deuxième circuit redresseur (D1, D2) est un circuit redresseur en pont en double alternance.

# FIG 1

EP 4 343 995 B1

FIG 2

FIG 3

FIG 4

FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014217292 A1
- DE 102014217332 A1
- DE 102015217108 A1
- DE 102014218831 A1
- DE 102014218910 A1
- DE 102016201651 A1
- DE 102015226475 A1
- DE 102015216981 A1
- DE 102016202827 A1
- DE 102016201659 A1
- DE 102015210479 A1
- DE 102014224173 A1
- DE 102015216023 A1
- DE 102016217425 A1

- DE 102016205196 A1
- DE 102016221093 A1
- DE 102017211900 A1
- DE 102017201239 A1
- DE 102017205003 A1
- DE 102017205004 A1
- DE 102017212477 A1
- DE 102017214903 A1
- DE 102017214907 A1
- DE 102017215820 A1
- WO 9813917 A
- US 3526812 A
- DE 102019213154 A1
- DE 102006022223 A1